# EUROPEAN PATENT SPECIFICATION

(11) **EP 2 099 037 B1**
(45) Date of publication and mention of the grant of the patent: **07.08.2013**
(21) Application number: 07744816.5
(22) Date of filing: 06.06.2007
(51) Int. Cl.: H01B 13/00, C09D 5/24, C09D 7/12, C09D 201/00, H01B 5/14, H01B 1/20

(54) **COMPOSITION FOR FORMATION OF TRANSPARENT CONDUCTIVE FILM, TRANSPARENT CONDUCTIVE FILM, AND DISPLAY**
ZUSAMMENSETUZNG ZUR BILDUNG EINES TRANSPARENTEN LEITFÄHIGEN FILMS, TRANSPARENTER LEITFÄHIGER FILM UND DISPLAY
COMPOSITION POUR LA FORMATION D'UN FILM CONDUCTEUR TRANSPARENT, FILM CONDUCTEUR TRANSPARENT, ET AFFICHAGE

(30) Priority: 26.12.2006 JP 2006350554
(43) Date of publication of application: 09.09.2009
(73) Proprietor: Mitsubishi Materials Electronic Chemicals Co., Ltd., Akita-shi Akita 010-8585 (JP); Mitsubishi Materials Corporation, Tokyo 100-8117 (JP); Dai Nippon Toryo Co., Ltd., Osaka-shi Osaka 554-0012 (JP)
(72) Inventor: MUROTA, Masamichi, Akita-shi Akita 010-8585 (JP); UMEDA, Hirotoshi, Akita-shi Akita 010-8585 (JP); IKEDA, Hiroshi, Akita-shi Akita 010-8585 (JP); OMURA, Kunio, Akita-shi Akita 010-8585 (JP); MUROUCHI, Masato, Otawara-shi Tochigi 324-8516 (JP); HAYASHI, Kenji, Otawara-shi Tochigi 324-8516 (JP); MIZOGUCHI, Daigou, Otawara-shi Tochigi 324-8516 (JP); MURAKAMI, Masaaki, Otawara-shi Tochigi 324-8516 (JP)
(74) Representative: Dossmann, Gérard
(86) International application number: PCT/JP2007/061473
(87) International publication number: WO 2008/078422

(56) References cited:
- JP-A- 06 278 244
- JP-A- 09 124 363
- JP-A- 2000 106 044
- JP-A- 2004 160 661
- US-A- 6 013 983
- DATABASE WPI Week 200663 Thomson Scientific, London, GB; AN 2006-604859 XP002556901 & JP 2006 188588 A (NIPPON KAYAKU KK) 20 July 2006 (2006-07-20)

## Description

The present invention relates to a composition for forming transparent conductive film, to a transparent conductive film, and to a display having a transparent conductive film on a screen thereof. More particularly, the invention relates to a composition which can form a transparent conductive film by applying the composition on the surface of any of various transparent substrates, particularly on a display screen of an LCD, a plasma display, etc., through coating or printing, and then curing the applied composition; to a transparent conductive film; and to a display having a transparent conductive film on a screen thereof. The formed transparent conductive film exhibits remarkably excellent scratch resistance and excellent antistatic effect and has very high visible light transmittance.

Generally, image-display devices and optical apparatuses such as a liquid crystal display and a cathode-ray tube display are provided with an anti-reflection film. The anti-reflection film must have not only high transparency and low reflectivity but also scratch resistance and a function of preventing deposition of foreign matter (e.g., dust) on the film. Therefore, high transparency, high refractive index, excellent scratch resistance, and excellent antistatic property are required for a high-refractive index layer included in the anti-reflection film.

One possible means for imparting antistatic property to a high-refractive index layer of the anti-reflection film is addition of a surfactant, a conductive polymer, or a conductive metal oxide to the high-refractive index layer. From the viewpoint of attaining long-term antistatic effect and high refractive index of the formed fllm, in a generally employed technique, conductive metal oxide microparticles are used. Generally, in the production of a high-refractive index layer of the anti-reflection film, a coating material containing one or more species of microparticles of high-refractive index metal oxides and a binder is employed (see, for example, Patent Documents 1, 2, and 3).

[Patent Document 1]
   Japanese Patent Application laid-Open (*kokai*) No. 11-181335
[Patent Document 2]
   Japanese Patent Application laid-Open (*kokai*) No. 2006-124406
[Patent Document 3]
   Japanese Patent Application laid-Open (*kokai*) No. 2006-188588

Patent Application JP 2006-188588 describes a photosensitive resin composition comprises a compound having two or more ethylenic unsaturated groups in a molecule, a metallic oxide having 1-200 nm primary particle size and a photopolymerization initiator.

Furthermore, Patent Application US 6,013,983 discloses a display device adapted for emitting a plurality of different colored lights to display a color image on a display surface, wherein a transparent colored conductive film formed from a composition comprising a metallic compound convertible to an oxide upon heating, a black or color inorganic pigment, and a liquid medium.

However, when the amount of metal oxide microparticles in the high-refractive index layer of the anti-reflection film is increased in order to enhance the refractive index of the high-refractive index layer, the resin content decreases with increasing amount of metal oxide microparticles. As a result, the scratch resistance of the high-refractive index layer, i.e., the scratch resistance of the anti-reflection film, decreases. In contrast, when the amount of metal oxide microparticles in the high-refractive index layer is reduced, the conductivity and refractive index of the high-refractive index layer of the anti-reflection film decrease. Therefore, difficulty is encountered in producing transparent conductive film having satisfactory characteristics including scratch resistance, high transparency, high refractive index, and antistatic property.

The present invention has been accomplished to solve the aforementioned problems, and an object of the invention is to provide a composition which can form a transparent conductive film that exhibits remarkably excellent scratch resistance and excellent antistatic effect and has very high visible light transmittance and which can impart a desired refractive index to the film. Another object of the invention is to provide such a transparent conductive film. Still another object of the invention is to provide a display having such a transparent conductive film on a screen thereof.

The present inventors have carried out extensive studies in order to attain the above objects and have found that a composition which can form a transparent conductive film that exhibits remarkably excellent scratch resistance, excellent antistatic effect, and has very high visible light transmittance and which can impart a desired refractive index to the film can be obtained from a composition for forming transparent conductive film including a binder component, and a conductive powder and a high-refractive Index powder which are dispersed in the binder component, wherein the conductive powder is formed of a specific amount of tin hydroxide powder and a conductive powder other than tin hydroxide powder. The present invention has been accomplished on the basis of this finding.

Accordingly, the present invention provides a composition for forming transparent conductive film, characterized by comprising a binder component, and a conductive powder and a high-refractive index powder which are dispersed in the binder component, wherein the conductive powder is formed of tin hydroxide powder in an amount of 0.1 to 30 mass% and a conductive powder other than tin hydroxide powder in an amount of 70 to 99.9 mass%.

The present invention also provides a transparent conductive film, **characterized i**n **that** the film is produced by applying a composition for forming transparent conductive film, through caating or printing, and curing the applied composition.

The present invention also provides a display characterized by having, on a screen thereof, the transparent conductive film produced from the composition for forming transparent conductive film.

The composition of the present invention for forming transparent conductive film can provide a transparent conductive film by applying the composition in the form of coating or ink on a surface of a substrate through coating or printing, and then curing the applied composition. The formed transparent conductive film exhibits remarkably excellent scratch resistance and excellent antistatic effect, and has very high visible light transmittance, and the refractive index of the film can be controlled as desired. Thus, the composition can be applied to a resin substrate having low heat resistance and to substrates of various shapes, and transparent conductive film can be continuously produced on a large scale. Needless to say, such transparent film having a large area can be readily produced. Through adjusting the relative amount of the high-refractive index powder incorporated into the composition, the refractive index of the film can be controlled as desired. In addition, through modifying film-formation conditions, a transparent conductive film having excellent transparency, conductivity, and scratch resistance; e.g., a surface resistivity of preferably 10⁶ to 10¹¹ Ω/square, more preferably 10⁷ to 10¹⁰ Ω/square, a light transmittance of preferably 85% or higher, a haze of preferably 1.5% or lower, and a refractive index of 1.55 to 1.90 can be produced. Thus, the composition of the present invention for forming transparent conductive film can be employed In a variety of fields including a transparent electrode of a liqu id crystal display, window material for solar cells, Infrared-ray-reflecting film, antistatic film, touch panels, plane-shape heaters, and electrophotographic recording, and exhibits excellent performance in the above fields.

In the composition of the present invention for forming transparent conductive film, tin hydroxide powder and a high-refractive index powder are dispersed in the binder component, wherein the conductive powder is formed of tin hydroxide powder in an amount of 0.1 to 30 mass% and a conductive powder other than tin hydroxide powder in an amount of 70 to 99,9 mass%, the tin hydroxide powder having a mean primary particle size of 0.2 µm or less and the high-refractive index powder having a refractive index of 1.8 to 3.0. The tin hydroxide powder employed in the invention may be powder of tin hydroxide itself or powder of tin hydroxide containing, as a dopant, at least one species selected from among P, Al, In, Zn, end Sb. Such tin hydroxide powders may be used singly or in combination of two or more species.

The tin hydroxide powder employable in the present invention may be a commercial product thereof or produced through a known method (e.g., neutralising an acidic solution in which tin chloride is dissolved with an alkali, to thereby co-precipitate a hydroxide, and drying the co-precipitate).

The tin hydroxide powder which contains at least one species selected from among P, Al, In, Zn, and Sb as a dopant and which can be employed in the present invention is commercially available. Alternatively, the doped tin hydroxide powder may be produced through a known technique: for example, neutralizing an acidic solution in which phosphorus chloride and tin chloride are dissolved with an alkali, to thereby co-precipitate phosphorus/tin hydroxide, and drying the co-precipitate. In the tin hydroxide powder containing at least one species selected from among P, Al, In, Zn, and Sb as a dopant, the amount of dopant with respect to (dopant + Sn) is preferably 0.1 to 20 at%, more preferably 1 to 15 at%. When the amount of dopant is less than 0.1 at%, the effect of dopant is insufficient, whereas when the amount of dopant is in excess of 20 at%, the dopant-containing tin hydroxide particles generally have high electrical resistance, thereby reducing the conductivity of the formed conductive film.

According to the present invention, the tin hydroxide powder, synergistically with a conductive powder other than tin hydroxide powder and a high-refractive index powder, enhances film strength to increase scratch resistance without reducing the conductivity of the formed film. In the present invention, the relative amount of tin hydroxide powder in the conductive powder is preferably 0.1 to 30 mass%, more preferably 1 to 20 mass%. When the relative amount of tin hydroxide powder in the conductive powder is less than 0.1 mass%, the formed film has unsatisfactory scratch resistance, whereas when the relative amount of tin hydroxide powder is in excess of 30 mass%, the formed film exhibits an enhanced transmittance but reduced scratch resistance due to the excessive amount of tin hydroxide.

In the present invention, a conductive powder other than tin hydroxide powder may be formed of zinc oxide, tin oxide, ATO, ITO, indium oxide, zinc aluminum oxide, antimony pentoxide, and zinc antimonate. Such conductive powders other than tin hydroxide powder may be used singly or in combination of two or more species.

In the present invention, the high-refractive index powder is incorporated into the composition In order to control the refractive index on the formed transparent conductive film. Note that the refractive index of a powder is an intrinsic value to the powder, and such refractive index values are disclosed in many references. When the powder having a refractive index less than 1.8 is employed, a film having high refractive index cannot be formed, whereas when a powder having a refractive index in excess of 3.0 is employed, the transparency of the formed film tends to decrease. No particular limitation is imposed on the type of the high-refractive index powder of the present invention, so long as the objects of the invention can be attained, and known products including commercial products may be used. Examples of such powders include metal oxides such as zirconium oxide (refractive Index n=2.4), titanium oxide (n=2.76), and cerium oxide (n=2.2).

When each of the tin hydroxide powder, the tin hydroxide powder containing, as a dopant, at least one species selected from among P, Al, In, Zn, and Sb, the conductive powder other than tin hydroxide powder, and high-refractive index powder has a mean primary particle size of 0.2 µm or less, a transparent conductive film can be produced. However, when the mean primary particle size is in excess of 0.2 µm, the transparency of the formed film tends to decrease. When the transparency of the produced transparent film is not an important factor for uses of the film, tin hydroxide powder having a particle size greater than 0.2 µm may also be employed. The compact of the conductive powder preferably has a resistivity of 1 × 10⁹ Ω·cm or less.

In the composition of the present invention for forming transparent conductive film, the ratio by mass of employed conductive powder to high-refractive index powder (conductive powder/high-refractive index powder) is preferably 30/70 to 90/10, more preferably 35/65 to 85/15. When the amount of conductive powder as reduced to the above ratio by mass is less than 30/70, the formed film generally has a high refractive index but poor conductivity. In contrast, when the amount of conductive powder as reduced to the above ratio by mass is in excess of 90/10, the formed film has good conductivity but generally fails to have a target refractive index.

In the composition of the present invention for forming transparent conductive film, the ratio by mass of (conductive powder + high-refractive index powder) to binder component [(conductive powder +high-refractive Index powder) /binder component] is preferably 5/95 to 95/5, more preferably 20/80 to 90/10, most preferably 30/70 to 85/15. When the total amount of conductive powder and high-refractive index powder as reduced to the above ratio by mass is less than 5/95, the formed film generally has sufficient transparency but poor conductivity. In contrast, when the total amount of conductive powder and high-refractive index powder as reduced to the above ratio by mass is in excess of 95/5. dispersibility of powder is impaired, and the formed conductive film generally has poor transparency, adhesion to a substrate, and film characteristics.

In the composition of the present invention for forming transparent conductive film, no particular limitation is imposed on the binder component so long as the binder component can be dissolved in a solvent employed, can disperse conductive powder and high-refractive index powder, and can bind the conductive powder and the high-refractive index powder to form transparent conductive film. Any of the binder components which are generally employed in coating materials may be used. In the present invention, the binder component is preferably an actinic-radiation-curable binder component.

Examples of the binder component include alkyd resin, polyester resin, unsaturated polyester resin, polyurethane resin, acrylic resin, epoxy resin, phenolic resin, vinyl resin, silicone resin, fluoro-resin, phthalate resin, amino resin, polyamide resin, polyacryl-silicone resin, melamine resin, urea resin, and modified species thereof. These binder resins may be used singly or In combination of two or more species.

It required, the binder component may further contain a cross-linking agent. Any cross-linking agent having, in a molecule thereof, two or more reactive functional groups such as a basic functional group (e.g., amino group), a neutral functional group (e.g., OH group), an acidic functional group (e.g., carboxyl group), or an isocyanate group may be employed.

The binder component may be a radical-polymerizable monomer. So long as the monomer has a radical-polymerizable unsaturated group (α,β-ethylenic unsaturated group), any monomer having a basic functional group (e.g., amino group), a neutral functional group (e.g., OH group), an acidic functional group (e.g., carboxyl group), or no such functional group may be employed.

Examples of the actinic-radiation-curable binder component which may be employed in the composition of the present invention for forming transparent conductive film include acrylate compounds and methacrylate compounds. Hereinafter, acrylate compounds and methacrylate compounds are collectively referred to as (meth)acrylate compounds.

In addition to the above-mentioned (meth)acrylate compounds, examples of the actinic-radiation-curable binder component which may be employed in the composition of the present invention for forming transparent conductive film further include radical-polymerizable monomers and/or oligomers. No particular limitation is imposed on the radical-polymerizable monomers, and any such monomers may be employed so long as the monomers each having a radical-polymerizable unsaturated group (α, β-ethylenic unsaturated group). Examples of such monomers Include monomers having a basic functional group such as an amino group, monomers each having a neutral functional group such as an OH group, monomers each having an acidic functional group such as a carboxyl group, and monomers each having no such a functional group.

Specific examples of radical-polymerizable monomers include non-(meth)acrylate radical-polymerizable monomers such as stryrene, vinyltoluene, vinyl acetate, N-vinylpyrrolidone, acrylonitrile, and allyl alcohol; monofunctional (meth)acrylates such as methyl (meth)acrylate, ethyl (meth)acrylate, isopropyl (meth)acrylate, 2-ethylhexyl (meth)acrylate, butyl (meth)acrylate, cyclohexyl (meth)acrylate, tetrahydrofurfuryl (meth)acrylate, N-vinylpyrrolidone, 2-hydroxyethyl (meth)acrylate, 2-hydroxypropyl (meth)acrylate, polyethylene glycol mono(meth)acrylate, methoxy-polyethylene glycol mono(meth)acrylate, polypropylene glycol mono(meth)acrylate, polyethylene glycol polypropylene glycol mono(meth)acrylate, polyethylene glycol polytetramethylene glycol mono(meth)acrylate, and glycidyl (meth)acrylate; bifunctional (meth)acrylates such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, polypropylene glycol di(meth)acrylate, neopentyl glycol di(meth)acrylate, allyl di(meth)acrylate, bisphenol A di(meth)acrylate, ethylene oxide-modified bisphenol A di(meth)acrylate, polyethylene oxide-modified bisphenol A di(meth)acrylate, ethylene oxide-modified bisphenol S di(meth)acrylate, bisphenol S di(meth)acrylate, 1,4-butanediol di(meth)acrylate, and 1,3-butylene glycol di(meth)acrylate; and (meth)acrylates having 3 or more functionalities such as trimethylolpropane tri(meth)acrylate, glycerol tri(meth)acrylate, pentaerythritol tri(meth)acrylate, pentaerythritol tetra(meth)acrylate, ethylene-modified trimethylolpropane tri(meth)acrylate, and dipentaerythritol hexa(meth)acrylate.

Specific examples of radical-polymerizable oligomers include prepolymers each having at least one (meth)acryloyl group such as polyester (meth)acrylate, polyurethane (meth)acrylate, epoxy (meth)acrylate, polyether (meth)acrylate, oligo (meth)acrylate, alkyd (meth)acrylate, polyol (meth)acrylate, and silicone (meth)acrylate. Of these, polyester (meth)acrylate, epoxy (meth)acrylate, and polyurethane (meth)acrylate are particularly preferred.

In order to impart advantageous actinic-radiation curability to the composition of the present invention for forming transparent conductive film, a polymerization initiator (photo-sensitizer) is preferably incorporated into the composition. Through incorporation of the initiator, the composition can be cured with a small dose of an actinic-radiation. However, since the composition of the present invention for forming transparent conductive film can also be cured by heat, an appropriate radical polymerization initiator (e.g., azobis(isobutyronitrile) may be incorporated into the composition as a thermally curing agent instead of the photo-sensitizer.

Examples of the polymerization initiator which allows the resin composition to be actinic-radiation-curable include 1-hydroxycyclohexyl phenyl ketone, benzophenone, benzyl dimethyl ketone, benzoin methyl ether, benzoin ethyl ether, p-chlorobenzophenone, 4-benzoyl-4-methyldiphenyl sulfide, 2-benzyl-2-dimethylamino-1-(4-morpholinophenyl)-butanone-1, and 2-methyl-1-[4-(methylthio)phenyl]-2-morpholinopropanone-1. These polymerization initiators may be used singly or in combination of two or more species. The polymerization initiator is preferably employed in an amount of 0.1 to 20 parts by mass, more preferably 1 to 15 parts by mass with respect to 100 parts by mass of the binder component.

So long as the objects of the invention are not impaired, other customary employed additives may be incorporated into the composition of the invention for forming transparent conductive film. Examples of such additives include a polymerization inhibitor, a curing catalyst, an anti-oxidant, and a leveling agent.

In the composition of the present invention for forming transparent conductive film, no particular limitation is imposed on the solvent so long as the solvent can dissolve or disperse the binder component, can disperse desired conductive powder and high-refractive index powder, and does not corrode a substrate. Any solvent which is generally employed in coating materials may be used. Examples of the solvent which may be used in the invention include hydrocarbons such as hexane, heptane, cyclohexane, toluene, and m-xylene; halohydrocarbons such as tetrachloromethane and trichloroethylene; ketones such as acetone, methyl ethyl ketone, methyl isobutyl ketone, diisobutyl ketone, isophorone, and cyclohexanone; ethers such as diethyl ether, dioxane, and tetrahydrofuran; esters such as ethyl acetate, butyl acetate, and isoamyl acetate; alcohols such as methanol, ethanol, n-propanol, isopropanol, n-butanol, 2-butanol, n-pentanol, 2-ethylhexanol, cyclohexanol, diacetone alcohol, ethylene glycol, propylene glycol, diethylene glycol, and glycerin; ether/alcohols and ether/esters such as ethylene glycol monoethyl ether, ethylene glycol monobutyl ether, ethylene glycol monoethyl ether acetate, propylene glycol monoethyl ether, propylene glycol monopropyl ether, propylene glycol monobutyl ether, and propylene glycol monomethyl ether acetate; and mixtures thereof. The amount of solvent is adjusted such that a composition (final product) prepared by dispersing desired components of conductive powder, high-refractive index powder, and light-transmission-ensuring microparticles has a viscosity suitable for coating or printing. The composition of the present invention for forming transparent conductive film preferably has a viscosity of 2 to 10,000 cps (E-type viscometer: 20°C).

The composition of the present invention for forming transparent conductive film may be produced through, for example, dispersing conductive powder and high-refractive index powder in the binder component solution which has been optionally diluted with organic solvent. Alternatively, the composition may be produced through dispersing conductive powder and high-refractive index powder in an organic solvent and adding the binder component to the dispersion. Needless to say, the composition may also be produced through mixing together the binder component, desired components of conductive powder, high-refractive index powder, and light-transmission-ensuring microparticles, and an organic solvent in a single operation, to thereby form a dispersion. The dispersion process may be carried out through a routine method by means of a paint shaker, a ball mill, a sand mill, a centri-mill, a three-roll mill, or a similar apparatus. Needless to say, dispersion may be carried out through a generally performed stirring process.

Examples of the material of the substrate to which the composition of the present invention for forming transparent conductive film is applied so as to form transparent conductive film include synthetic resins, glass materials, and ceramic materials, which are widely employed in variety of fields including electrics and electronics. The substrate may have any shape such as sheet, film, or plate. Non-limitative specific examples of synthetic resins include polyethylene, polypropylene, polycarbonate, acrylic resin, methacrylic resin, poly(vinyl chloride), polyester resin, polyamide resin, and phenolic resin.

Application (coating or printing) of the composition of the present invention for forming transparent conductive film onto a substrate may be performed through a routine method such as roll coating, spin coating, or screen printing. Subsequently, when the binder component is not actinic-radiation-curable, if required, the applied composition is heated to evaporate solvent, to thereby dry and cure the coating film. When the binder component is actinic-radiation-curable, if required, the applied composition is heated to evaporate solvent, and the coating film is dried. Subsequently, the coating film is irradiated with actinic radiation (UV ray or electron beam). Examples of the source of actinic radiation which may be employed in the invention include UV sources such as a low-pressure mercury lamp, a high-pressure mercury lamp, a metal halide lamp, a xenon lamp, an excimer laser, and a dye layer and an electron beam accelerator. The dose of actinic radiation is preferably 50 to 3,000 mJ/cm² in the case of an UV ray, and 0.2 to 1,000 µC/cm² in the case of electron beam. By the action of actinic radiation, the binder component is polymerized, to thereby form a transparent conductive film in which conductive powder and high-refractive index powder are bound by resin. Preferably, the transparent conductive film has thickness of 0.1 to 10 µm.

The transparent conductive film of the present invention formed, on a substrate, from the composition of the present invention for forming transparent conductive film has excellent transparency, conductivity, and scratch resistance; e.g., a surface resistivity of preferably 10⁶ to 10¹¹ Ω/square, more preferably 10⁷ to 10¹⁰ Ω/square, a light transmittance of preferably 85% or higher, and a haze of 1.5% or lower, can be produced. In addition, the refractive index of the transparent conductive film can be controlled. The transparent conductive film having such properties can be used as, for example, a dust-preventive film for use in electrophotographic recording or an antistatic film. The film may also be employed on a display screen. Examples

The present invention will next be described in detail by way of Examples and Comparative Examples. Unless otherwise specified, in Examples and comparative Examples, the unit "part(s)" refers to "part(s) by mass." In Examples and Comparative Examples, the following substances were employed.

### <Tin hydroxide powder>

Tin hydroxide powder having a mean primary particle size of 0.05 µm and a resistivity of 1 × 10⁷ Ω·cm;
P-doped Sn(OH)₄ powder containing phosphorus as a dopant, having a P/(Sn + P) of 5.0 at% and being formed of particles having a mean primary particle size of 0.05 µm and a resistivity of 5 × 10⁷ Ω·cm;

### <Conductive powder other than tin hydroxide powder>

ATO having a mean primary particle size of 0.06 µm and a resistivity of 10 Ω·cm;
SnO₂ having a mean primary particle size of 0.06 µm and a resistivity of 300 Ω·cm;

### <High-refractive index powder>

ZrO₂ powder having a refractive index of 2.4;
TiO₂ powder having a refractive index of 2.76;

### <Binder component>

KAYARAD TMPTA (trimethylolpropane triacrylate, product of Nippon Kayaku Co., Ltd.);
KAYARAD DPHA (dipentaerythritol hexaacrylate, product of Nippon Kayaku Co., Ltd.);

### <Initiator>

IRGACURE 907 (2-methyl-1-[4-(methylthio)phenyl]-2-morpholinopropan-1-one, product of Ciba Specialty Chemicals K.K.).

### Example 1

A binder component composed of TMPTA (20 parts) and DPHA (10 parts), ATO powder (37.8 parts), tin hydroxide powder (4.2 parts), zirconium oxide powder (28 parts), isobutanol (150 parts), and glass beads (250 parts) were placed in a vessel and kneaded for five hours by means of a paint-shaker, with the dispersion state being monitored by means of a particle gauge. After kneading, IRGACURE 907 (3 parts) was added to the kneaded product, and the mixture was completely dissolved. Glass beads were removed, to thereby produce a viscous liquid. Subsequently, the viscous liquid was applied onto a PET film (thickness: 100 µm, Toyobo A4100) by means of a roll coater, and organic solvent was evaporated. The formed coating was irradiated with a UV ray from a high-pressure mercury lamp at a dose of 500 mJ/cm², whereby a transparent cured coating film having a thickness of 5 µm was formed.

### Example 2

A binder component composed of TMPTA (30 parts), tin hydroxide powder containing phosphorus as a dopant (70 parts), isobutanol (solvent) (150 parts), and glass beads (250 parts) were placed in a vessel and kneaded for five hours by means of a paint-shaker, with the dispersion state being monitored by means of a particle gauge. After kneading, IRGACURE 907 (3 parts) serving as a photopolymerization initiator was added to the kneaded product, and the mixture was completely dissolved. Glass beads were removed, to thereby produce a viscous liquid (composition A). Separately, the procedure of preparing composition A was repeated, except that ATO powder (70 parts) was used instead of tin hydroxide powder (70 parts), to thereby produce another viscous liquid (composition B). Also, the procedure of preparing composition A was repeated, except that zirconium oxide powder (70 parts) was used instead of tin hydroxide powder (70 parts), to thereby produce another viscous liquid (composition C). The thus-produced composition A (54 parts), composition B (6 parts), and composition C (40 parts) were sufficiently mixed, to thereby prepare a coating liquid. Subsequently, in a manner similar to that of Experimental Example 1, a transparent cured coating film having a thickness of 5 µm was formed.

### Example 3

The procedure of Example 2 was repeated, except that TMPTA (20 parts) and DPHA (10 parts) were used instead of TMPTA (30 parts), and tin hydroxide powder containing no dopant (70 parts) was used instead of tin hydroxide powder containing phosphorus as a dopant (70 parts), to thereby produce composition A. Also, the procedure of Example 2 was repeated, except that SnO₂ powder (70 parts) was used instead of ATO powder (70 parts), to thereby produce composition B. Also, the procedure of Example 2 was repeated, except that titanium oxide (70 parts) was used instead of zirconium oxide (70 parts), to thereby produce composition C. The thus-produced composition A (67.5 parts), composition B (7.5 parts), and composition C (25 parts) were sufficiently mixed, to thereby prepare a coating liquid. Subsequently, in a manner similar to that of Experimental Example 1, a transparent cured coating film having a thickness of 5 µm was formed.

### Comparative Example 1

A binder component composed of DPHA (20 parts) and TMPTA (10 parts), tin hydroxide powder (35 parts), zirconium oxide powder (35 parts), isobutanol (solvent) (150 parts), and glass beads (250 parts) were placed in a vessel and kneaded for five hours by means of a paint-shaker, with the dispersion state being monitored by means of a particle gauge. After kneading, IRGACURE 907 (3 parts) was added to the kneaded product, and the mixture was completely dissolved. Glass beads were removed, to thereby produce a viscous liquid. Subsequently, the viscous liquid was applied onto a PET film (thickness: 100 µm, Toyobo A4100) by means of a roll coater, and organic solvent was evaporated. The formed coating was irradiated with a UV ray from a high-pressure mercury lamp at a dose of 500 mJ/cm², whereby a transparent cured coating film having a thickness of 5 µm was formed.

### Comparative Example 2

The procedure of Comparative Example 1 was repeated, except that ATO (35 parts) was used instead of tin hydroxide (35 parts), to thereby form a transparent cured coating film having a thickness of 5 µm.

The total light transmittance (%) and haze (%) of the transparent cured coating films produced in Examples 1 to 3 and Comparative Examples 1 and 2 were determined by means of TC-HIII DPK (product of Tokyo Denshoku Technical Center). These values were determined when each film was stacked on a substrate. The surface resistivity (Ω/square) of each film was determined by a surface resistivity meter (Hiresta IP MCP-HT260, product of Mitsubishi Chemical Corporation). Scratch resistance was evaluated visually based on the ratings described hereinbelow. The refractive index of each of the cured coating films produced in the Examples and Comparative Examples was determined by means of an Abbe refractometer DR-M4 (product of Atago) (20°C). The results are shown in Table 1.

### <Ratings for scratch resistance evaluation>

The surface of each transparent cured coating film sample was scratched reciprocally 20 times with steel wool (#0000) at a load of 200 g. Similarly, the surface of the sample was scratched reciprocally 20 times with steel wool (#0000) at a load of 1,000 g. In both cases, the surface state after scratching was visually evaluated based on the following ratings:

○: no scratches;
Δ: slightly scratched; and
X: scratched.

[Table 1]

**Table 1**

| | | Examples | | | Comp. Examples | |
|---|---|---|---|---|---|---|
| | | 1 | 2 | 3 | 1 | 2 |
| Conductive powder | | ATO Sn(OH)₄ | ATO P-doped Sn(OH)₄ | SnO₂ Sn(OH)₄ | Sn(OH)₄ | ATO |
| High-refractive index powder | | ZrO₂ | ZrO₂ | TiO₂ | ZrO₂ | ZrO₂ |
| Sn hydroxide content of conductive powder (mass%) | | 10 | 10 | 10 | 100 | 0 |
| Conductive powder/high-refractive index powder | | 60/40 | 60/40 | 75/25 | 50/50 | 50/50 |
| P/B | | 70/30 | 70/30 | 70/30 | 70/30 | 70/30 |
| Transmittance (%) | | 85 | 86 | 87 | 87 | 85 |
| Haze (%) | | 0.8 | 0.7 | 0.9 | 1.0 | 0.9 |
| Surface resistivity (Ω/square) | | 6 × 10⁷ | 6 × 10⁷ | 1 × 10⁸ | 4 × 10¹⁰ | 2 × 10⁸ |
| Scratch resistance | 200 g load | ○ | ○ | ○ | ○ | ○ |
| | 1,000 g load | ○ | ○ | ○ | × | Δ |
| Refractive index | | 1.65 | 1.65 | 1.72 | 1.65 | 1.65 |

As is clear from Table 1, when the composition of the present invention for forming transparent conductive film, the composition containing tin hydroxide powder, a conductive powder other than tin hydroxide powder, and high-refractive index powder, was applied to a substrate (Examples 1 to 3), a transparent conductive film having remarkably excellent scratch resistance and excellent transparency and conductivity; e.g., a surface resistivity of 10⁶ to 10¹¹ Ω/square, a light transmittance of 85% or higher, and a haze of 1.5% or lower, was produced, and the refractive index of the film could be controlled. However, when the conductive powder was formed of solely tin hydroxide powder (Comparative Example 1) or ATO powder (Comparative Example 2), the formed transparent film exhibited insufficient scratch resistance.

## Claims

1. A composition for forming transparent conductive film, **characterized by** comprising a binder component, and a conductive powder and a high-refractive index powder which are dispersed in the binder component, wherein the conductive powder is formed of tin hydroxide powder in an amount of 0.1 to 30 mass% and a conductive powder other than tin hydroxide powder in an amount of 70 to 99.9 mass%, the tin hydroxide powder having a mean primary particle size of 0.2 µm or less and the high-refractive index powder having a refractive index of 1.8 to 3.0.

2. A composition for forming transparent conductive film as described in claim 1, wherein the tin hydroxide powder contains, as a dopant, at least one species selected from among P, Al, In, Zn, and Sb.

3. A composition for forming transparent conductive film as described in claim 2, wherein the amount of dopant which is at least one species selected from among P, Al, In, Zn, and Sb is 0.1 to 20 at% with respect to the total amount of dopant and Sn.

4. A composition for forming transparent conductive film as described in claim 1, 2, or 3, wherein the conductive powder other than tin hydroxide powder is formed of at least one species selected from the group consisting of zinc oxide, tin oxide, ATO, ITO, indium oxide, zinc aluminum oxide, antimony pentoxide, and zinc antimonate.

5. A composition for forming transparent conductive film as described in any one of claims 1 to 4, wherein the high-refractive index powder is formed of at least one species selected from the group consisting of zirconium oxide, titanium oxide, and cerium oxide.

6. A composition for forming transparent conductive film as described in any one of claims 1 to 5, wherein the ratio by mass represented by conductive powder/high-refractive index powder is 30/70 to 90/10.

7. A composition for forming transparent conductive film as described in any one of claims 1 to 6, wherein the ratio by mass represented by (conductive powder + high-refractive index powder)/binder component is 5/95 to 95/5.

8. A transparent conductive film, **characterized in that** the film is produced by applying a composition for forming transparent conductive film as recited in any one of claims 1 to 7 through coating or printing and curing the applied composition.

9. A transparent conductive film as described in claim 8, which has a surface resistivity of 10⁶ to 10¹¹ Ω/square, a light transmittance of 85% or higher, a haze of 1.5% or lower, and a refractive index of 1.55 to 1.90.

10. A display **characterized by** having, on a screen thereof, a transparent conductive film as recited in claim 8 or 9.

## Patentansprüche

1. Zusammensetzung zur Bildung einer transparenten leitfähigen Folie, **dadurch gekennzeichnet, dass** sie eine Bindemittelkomponente sowie ein leitfähiges Pulver und ein Pulver mit hohem Brechungsindex umfasst, die in der Bindemittelkomponente dispergiert sind, wobei das leitfähige Pulver aus Zinnhydroxidpulver in einer Menge von 0,1 bis 30 Masse-% und einem anderen leitfähigen Pulver als Zinnhydroxidpulver in einer Menge von 70 bis 99,9 Masse-% gebildet ist, wobei das Zinnhydroxidpulver eine mittlere primäre Partikelgröße von 0,2 µm oder weniger hat und das Pulver mit hohem Brechungsindex einen Brechungsindex von 1,8 bis 3,0 hat.

2. Zusammensetzung zur Bildung einer transparenten leitfähigen Folie nach Anspruch 1, wobei das Zinnhydroxidpulver als Dotierstoff mindestens eine Substanz enthält, die aus P, Al, In, Zn und Sb ausgewählt ist.

3. Zusammensetzung zur Bildung einer transparenten leitfähigen Folie nach Anspruch 2, wobei die Menge an Dotierstoff, der mindestens eine aus P, Al, In, Zn und Sb ausgewählte Substanz ist, 0,1 bis 20 Masse-% beträgt, bezogen auf die Gesamtmenge an Dotierstoff und Sn.

4. Zusammensetzung zur Bildung einer transparenten leitfähigen Folie nach Anspruch 1, 2 oder 3, wobei das andere leitfähige Pulver als Zinnhydroxidpulver aus mindestens einer Substanz gebildet ist, die aus der aus Zinkoxid, Zinnoxid, ATO, ITO, Indiumoxid, Zinkaluminiumoxid, Antimonpentoxid und Zinkantimonat bestehenden Gruppe ausgewählt ist.

5. Zusammensetzung zur Bildung einer transparenten leitfähigen Folie nach einem der Ansprüche 1 bis 4, wobei das Pulver mit hohem Brechungsindex aus mindestens einer Substanz gebildet ist, die aus der aus Zirconiumoxid, Titanoxid und Ceroxid bestehenden Gruppe ausgewählt ist.

6. Zusammensetzung zur Bildung einer transparenten leitfähigen Folie nach einem der Ansprüche 1 bis 5, wobei das durch das Verhältnis von leitfähigem Pulver zu Pulver mit hohem Brechungsindex repräsentierte Massenverhältnis 30/70 bis 90/10 beträgt.

7. Zusammensetzung zur Bildung einer transparenten leitfähigen Folie nach einem der Ansprüche 1 bis 6, wobei das durch das Verhältnis von (leitfähiges Pulver + Pulver mit hohem Brechungsindex) / Bindemittelkomponente repräsentierte Massenverhältnis 5/95 bis 95/5 beträgt.

8. Transparente leitfähige Folie, **dadurch gekennzeichnet, dass** die Folie durch Aufbringen einer Zusammensetzung zur Bildung einer transparenten leitfähigen Folie nach einem der Ansprüche 1 bis 7 durch Beschichten oder Aufdrucken und Härten der aufgebrachten Zusammensetzung hergestellt wird.

9. Transparente leitfähige Folie nach Anspruch 8, die einen spezifischen Oberflächenwiderstand von 10⁶ bis 10¹¹ Ω/Quadrat, eine Lichtdurchlässigkeit von 85% oder höher, eine Trübung von 1,5% oder niedriger und einen Brechungsindex von 1,55 bis 1,90 hat.

10. Display, das **dadurch gekennzeichnet ist, dass** es auf seinem Bildschirm eine transparente leitfähige Folie nach Anspruch 8 oder 9 aufweist.

## Revendications

1. Composition pour formation d'un film conducteur et transparent, **caractérisée en ce qu'**elle comprend un composant liant, ainsi qu'une poudre conductrice et une poudre à haut indice de réfraction qui sont dispersées au sein du composant liant, laquelle poudre conductrice est constituée d'hydroxyde d'étain en poudre, en une proportion de 0,1 à 30 % en masse, et d'une poudre conductrice autre que de l'hydroxyde d'étain en poudre, en une proportion de 70 à 99,9 % en masse, lequel hydroxyde d'étain en poudre présente une taille moyenne de particules primaires inférieure ou égale à 0,2 µm, et laquelle poudre à haut indice de réfraction présente un indice de réfraction valant de 1,8 à 3,0.

2. Composition pour formation d'un film conducteur et transparent, conforme à la revendication 1, dans laquelle l'hydroxyde d'étain en poudre contient, en tant que dopant, au moins un élément choisi parmi les phosphore, aluminium, indium, zinc et antimoine.

3. Composition pour formation d'un film conducteur et transparent, conforme à la revendication 2, dans laquelle la quantité du ou des dopant(s) choisi(s), au nombre d'au moins un, parmi les phosphore, aluminium, indium, zinc et antimoine représente de 0,1 à 20 %, en atomes, de la quantité totale de dopant(s) et d'étain.

4. Composition pour formation d'un film conducteur et transparent, conforme à la revendication 1, 2 ou 3, dans laquelle la poudre conductrice autre que de l'hydroxyde d'étain en poudre est constituée d'au moins un composé choisi parmi les suivants : oxyde de zinc, oxyde d'étain, oxyde d'étain dopé à l'antimoine (ATO), oxyde d'indium dopé à l'étain (ITO), oxyde d'indium, oxyde de zinc et d'aluminium, pentoxyde d'antimoine, et antimoniate de zinc.

5. Composition pour formation d'un film conducteur et transparent, conforme à l'une des revendications 1 à 4, dans laquelle la poudre à haut indice de réfraction est constituée d'au moins une espèce choisie dans l'ensemble formé par de l'oxyde de zirconium, de l'oxyde de titane et de l'oxyde de cérium.

6. Composition pour formation d'un film conducteur et transparent, conforme à l'une des revendications 1 à 5, dans laquelle le rapport en masse de la poudre conductrice à la poudre à haut indice de réfraction vaut de 30/70 à 90/10.

7. Composition pour formation d'un film conducteur et transparent, conforme à l'une des revendications 1 à 6, dans lequel le rapport en masse du total des poudres, la poudre conductrice et la poudre à haut indice de réfraction, au composant liant vaut de 5/95 à 95/5.

8. Film conducteur et transparent, **caractérisé en ce que** l'on a produit ce film en étalant une composition pour formation d'un film conducteur et transparent, conforme à l'une des revendications 1 à 7, par enduction ou impression, et en faisant durcir la composition étalée.

9. Film conducteur et transparent conforme à la revendication 8, qui présente une résistivité de surface de 10⁶ à 10¹¹ Ω/□, une photo-transmittance de 85 % ou plus, un degré de voile de 1,5 % ou moins, et un indice de réfraction de 1,55 à 1,90.

10. Afficheur, **caractérisé en ce qu'**il porte sur son écran un film conducteur et transparent conforme à la revendication 8 ou 9.
